(19) Europäisches Patentamt / European Patent Office / Office européen des brevets

(11) **EP 4 606 670 A1**

(12) **EUROPEAN PATENT APPLICATION**


(43) Date of publication:
**27.08.2025 Bulletin 2025/35**

(21) Application number: **25157543.7**

(22) Date of filing: **12.02.2025**

(51) International Patent Classification (IPC):
***B60W 30/16*** *(2020.01)*

(52) Cooperative Patent Classification (CPC):
**B60W 30/16;** B60W 2520/10; B60W 2554/4041; B60W 2554/4042; B60W 2554/4045; B60W 2554/801; B60W 2554/802; B60W 2554/804; B60W 2754/30

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **22.02.2024 JP 2024025488**



(71) Applicant: **TOYOTA JIDOSHA KABUSHIKI KAISHA**
**Toyota-shi**
**Aichi 471-8571 (JP)**

(72) Inventor: **YOSHINO, Junya**
**Toyota-shi, Aichi 471-8571 (JP)**

(74) Representative: **Cabinet Beau de Loménie**
**103, rue de Grenelle**
**75340 Paris Cedex 07 (FR)**


(54) **VEHICLE TRAVELING CONTROL APPARATUS, VEHICLE TRAVELING CONTROL METHOD, AND NON-TRANSITORY STORAGE MEDIUM STORING PROGRAM THEREOF**


(57) A vehicle traveling control apparatus determines whether or not a specific situation has been occurring while executing a following inter-vehicle distance control, based on a vehicle speed (Vh) of the host vehicle (HV), a vehicle speed (Vaf) of an adjacent lane rear vehicle (AF), a vehicle speed (Vap) of an adjacent lane preceding vehicle (AP), and a distance (Da) from the host vehicle (HV) to the adjacent lane preceding vehicle (AP). The specific situation is a situation where the adjacent lane rear vehicle is likely to cut in between the host vehicle and an objective vehicle to be followed. The vehicle traveling control apparatus shortens a target inter-vehicle distance when a shortening condition of the target inter-vehicle distance becomes satisfied, and extends the target inter-vehicle distance when an extending condition of the target inter-vehicle distance becomes satisfied, in a case where it determines that the specific situation is occurring.


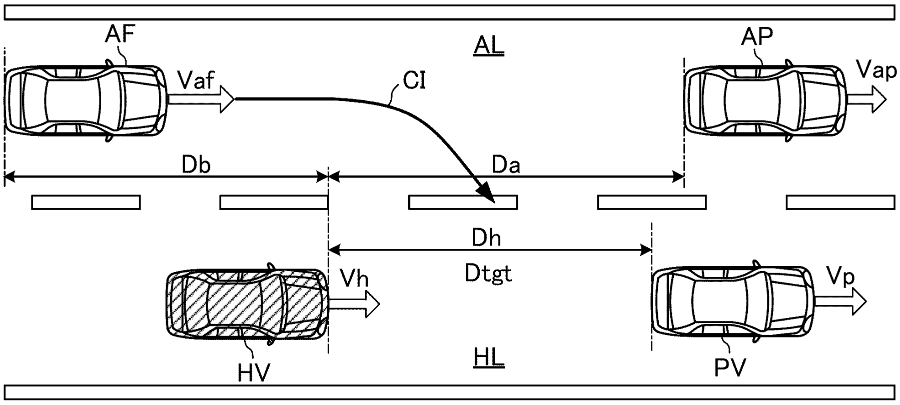


FIG.2

EP 4 606 670 A1

## Description

TECHNICAL FIELD

The present disclosure relates to a vehicle traveling control apparatus, a vehicle traveling control method, and a non-transitory storage medium storing a program thereof, for performing a following inter-vehicle distance control (i.e., an inter-vehicle distance control).

BACKGROUND

There has been a known vehicle traveling control apparatus for performing a following inter-vehicle distance control to let a host vehicle follow a preceding vehicle traveling immediately ahead of the host vehicle (i.e., a following-up target vehicle or an objective vehicle to be followed) to maintain an inter-vehicle distance between the host vehicle and the objective vehicle to be followed at a predetermined target inter-vehicle distance. One of such apparatuses (hereinafter, referred to as a "conventional apparatus") determines that a cutting-in by another vehicle between the host vehicle and the preceding vehicle (objective vehicle to be followed) has occurred, when a sudden decrease in the inter-vehicle distance is detected while the following inter-vehicle distance control is being executed. The conventional apparatus terminates the following inter-vehicle distance control when it determines that a frequency of the cutting-in is high (refer to Japanese Patent Application Laid-Open No. Heisei 6-262960).

The cutting-in may occur frequently when the target inter-vehicle distance is set at a relatively long distance. Thus, the conventional apparatus may frequently terminate the following inter-vehicle distance control.

Whereas, if the conventional apparatus is configured to continue the following inter-vehicle distance control even when the frequency of the cutting-in is high, a situation where the inter-vehicle distance between the host vehicle and the preceding vehicle (i.e., the cut-in vehicle) is short frequently happens. The host vehicle is rapidly decelerated every time the cutting-in occurs. Consequently, a driver of the host vehicle may feel a sense of unease.

SUMMARY

The present disclosure is made to cope with the above-described problem. Namely, one of objects of the present disclosure is to provide a vehicle traveling control apparatus, a vehicle traveling control method, and a non-transitory storage medium storing a program thereof, that are able to reduce a possibility that the driver feels a sense of unease due to the cut-in of another vehicle, by changing the inter-vehicle distance while the following inter-vehicle distance control is being executed to an appropriate distance.

One of embodiments of the vehicle traveling control apparatus according to present disclosure comprises a controller (10) configured to be capable of executing a following inter-vehicle distance control to let a host vehicle (HV) travel in such a manner that an inter-vehicle distance (Dh) between the host vehicle (HV) and an objective vehicle to be followed (PV) traveling immediately ahead of the host vehicle is maintained at a predetermined target inter-vehicle distance (Dtgt).

The controller is configured to change the target inter-vehicle distance (step 535, step 550) when a specific situation has occurred (step 525: Yes) while executing the following inter-vehicle distance control, the specific situation being a situation where an adjacent lane rear vehicle (AF) that is traveling in an adjacent lane (AL) adjacent to a host lane (HL) in which the host vehicle is traveling and behind the host vehicle is present, and the adjacent lane rear vehicle (AF) is likely to cut in between the host vehicle (HV) and the objective vehicle to be followed (PV).

For example, the thus configured vehicle traveling control apparatus can shorten the target inter-vehicle distance when the specific situation has occurred, and therefore, can reduce a possibility that the adjacent lane rear vehicle cuts in between the host vehicle and the objective vehicle to be followed. For example, the thus configured vehicle traveling control apparatus can extend (lengthen) the target inter-vehicle distance when the specific situation has occurred, and therefore, even when the adjacent lane rear vehicle has cut in between the host vehicle and the objective vehicle to be followed, the distance between the host vehicle and the vehicle that has cut in can be relatively long. Accordingly, the vehicle traveling control apparatus can reduce the possibility that the host vehicle is rapidly decelerated, and therefore, can reduce the possibility the driver of the host vehicle feels a sense of unease.

In the above-described embodiment,
the controller is configured to determine that the specific situation is occurring (step 525) when at least a first relative speed condition (Vaf > Vh) is satisfied, the first relative speed condition being a condition that is satisfied when a vehicle speed (Vaf) of the adjacent lane rear vehicle is higher than a vehicle speed (Vh) of the host vehicle.

When the vehicle speed (Vaf) of the adjacent lane rear vehicle is higher than the vehicle speed (Vh) of the host vehicle, the adjacent lane rear vehicle is likely to cut in between the host vehicle and the objective vehicle to be followed after the adjacent lane rear vehicle overtakes the host vehicle. Thus, the above embodiment can easily determine that the specific situation has occurred.

In the above-described embodiment,

the controller is configured to determine that the specific situation is occurring (step 525) when a second relative speed condition (Vap ≦ Vh) is satisfied in addition to the first relative speed condition, the second relative speed condition being a condition that is satisfied when an adjacent lane preceding vehicle (AP) that is traveling immediately ahead of the adjacent lane rear vehicle (AF) is present in the adjacent lane, and a vehicle speed (Vap) of the adjacent lane preceding vehicle (AP) is equal to or lower than the vehicle speed (Vh) of the host vehicle.

When the adjacent lane preceding vehicle that is slower than the host vehicle is traveling immediately ahead of the adjacent lane rear vehicle, the adjacent lane rear vehicle is likely to cut in between the host vehicle and the objective vehicle to be followed in order to overtake the adjacent lane preceding vehicle. Thus, the above embodiment can easily determine that the specific situation has occurred.

In the above-described embodiment,

the controller is configured to determine that the specific situation is occurring (step 525) when a first inter-vehicle distance condition (Da ≧ C1th) is satisfied in addition to the first relative speed condition and the second relative speed condition, the first inter-vehicle distance condition being a condition that is satisfied when a distance (Da) from the host vehicle (HV) to the adjacent lane preceding vehicle (AP) is equal to or longer than a first distance threshold (C1th).

When the distance from the host vehicle to the adjacent lane preceding vehicle is equal to or longer than the first distance threshold, the possibility that the adjacent lane rear vehicle cuts in between the host vehicle and the objective vehicle to be followed is higher than when the distance from the host vehicle to the adjacent lane preceding vehicle is shorter than the first distance threshold. Thus, the above embodiment can easily determine that the specific situation has occurred.

In the above-described embodiment,

the controller is configured to shorten the target inter-vehicle distance (step 535) when at least a second inter-vehicle distance condition (Da ≦ C2th) is satisfied (step 530; Yes) in a case in which it is determined that the specific situation is occurring (step 525: Yes), the second inter-vehicle distance condition being a condition that is satisfied when the distance (Da) from the host vehicle to the adjacent lane preceding vehicle is equal to or shorter than a second distance threshold (C2th) that is longer than the first distance threshold (C1th).

When the second inter-vehicle distance condition (Da ≦ C2th) is satisfied in addition to the first inter-vehicle distance condition (C1th ≦ Da), if the adjacent lane rear vehicle actually has cut in between the host vehicle and the objective vehicle to be followed, the inter-vehicle distance between the host vehicle and the vehicle that has cut in becomes extremely short, and thus, the host vehicle may be rapidly decelerated. Therefore, when the second inter-vehicle distance condition (Da ≦ C2th) is satisfied in addition to the first inter-vehicle distance condition (C1th ≦ Da), the above-described embodiment shortens the target inter-vehicle distance to reduce the possibility that the adjacent lane rear vehicle cuts in between the host vehicle and the objective vehicle to be followed. Consequently, the frequency that the host vehicle is rapidly decelerated can be reduced, and therefore, the possibility the driver of the host vehicle feels a sense of unease can be reduced.

In the above-described embodiment,

the controller is configured to extend the target inter-vehicle distance (step 550) when at least a third inter-vehicle distance condition (Da > C2th) is satisfied (step 545: Yes) in a case in which it is determined that the specific situation is occurring (step 525: Yes), the third inter-vehicle distance condition being a condition that is satisfied when the distance (Da) from the host vehicle to the adjacent lane preceding vehicle is longer than a second distance threshold (C2th) that is longer than the first distance threshold (C1th).

When the third inter-vehicle distance condition (Da>C2th) is satisfied, the adjacent lane rear vehicle is likely to cut in between the host vehicle and the objective vehicle to be followed. Thus, in this case, the above embodiment extends the target inter-vehicle distance. Therefore, even if the adjacent lane rear vehicle has cut in between the host vehicle and the objective vehicle to be followed, the distance between the host vehicle and the adjacent lane rear vehicle that has cut in is not extremely short. Consequently, the host vehicle is not rapidly decelerated, and the adjacent lane rear vehicle can smoothly cut in. This can avoid the situation where the driver of the host vehicle feels a sense of unease.

In the above-described embodiment,

the controller is configured to shorten the target inter-vehicle distance (step 535) when a second inter-vehicle distance condition (Da ≦ C2th) and a third relative speed condition (Vaf < Vh+Vth) are both satisfied (step 530: Yes) in a case in which it is determined that the specific situation is occurring (step 525: Yes).

The second inter-vehicle distance condition (Da ≦ C2th) is a condition that is satisfied when the distance (Da) from the host vehicle to the adjacent lane preceding vehicle is equal to or shorter than a second distance threshold (C2th) that is longer than the first distance threshold (C1 th).

The third relative speed condition (Vaf < Vh+Vth) is a condition that is satisfied when the vehicle speed (Vaf) of the adjacent lane rear vehicle is lower than a vehicle speed (Vh+Vth) obtained by adding a predetermined vehicle speed threshold (Vth) to the vehicle speed (Vh) of the host vehicle.

When the second inter-vehicle distance condition (Da ≦ C2th) and the third relative speed condition (Vaf < Vh+Vth) are both satisfied, it can be said that the vehicle speed (Vaf) of the adjacent lane rear vehicle is slightly higher than the vehicle speed (Vh) of the host vehicle. Therefore, the possibility that the adjacent lane rear vehicle cuts in between the host vehicle and the objective vehicle to be followed after it overtakes the host vehicle moderately is relatively high, even when the inter-vehicle distance between the host vehicle and the objective vehicle to be followed is relatively short (i.e., even when the second inter-vehicle distance condition is satisfied). Besides, when the adjacent lane rear vehicle actually cuts in between the host vehicle and the objective vehicle to be followed, the distance between the host vehicle and the adjacent lane rear vehicle actually that has actually cuts in becomes extremely short. Accordingly, when the second inter-vehicle distance condition (Da ≦ C2th) and the third relative speed condition (Vaf < Vh+Vth) are both satisfied, the above embodiment shortens the target inter-vehicle distance to reduce the possibility that the adjacent lane rear vehicle cuts in between the host vehicle and the objective vehicle to be followed. Consequently, the frequency that the host vehicle is rapidly decelerated can be reduced, and therefore, the possibility the driver of the host vehicle feels a sense of unease can be reduced.

In the above-described embodiment,
the controller is configured to extend the target inter-vehicle distance (step 550) when a third inter-vehicle distance condition (C2th < Da) and a fourth relative speed condition (Vaf ≧ Vh+Vth) are both satisfied (step 545: Yes) in a case in which it is determined that the specific situation is occurring (step 525: Yes).

The third inter-vehicle distance condition (C2th < Da) is a condition that is satisfied when the distance (Da) from the host vehicle to the adjacent lane preceding vehicle is longer than a second distance threshold (C2th) that is longer than the first distance threshold (C1th).

The fourth relative speed condition (Vaf ≧ Vh+Vth) is a condition that is satisfied when the vehicle speed (Vaf) of the adjacent lane rear vehicle is higher than a vehicle speed (Vh+Vth) obtained by adding a predetermined vehicle speed threshold (Vth) to the vehicle speed (Vh) of the host vehicle.

When the third inter-vehicle distance condition (Da > C2th) and the fourth relative speed condition (Vaf ≧ Vh+Vth) are both satisfied, it is highly likely that the adjacent lane rear vehicle cuts in between the host vehicle and the objective vehicle to be followed. Therefore, when third inter-vehicle distance condition (Da > C2th) and the fourth relative speed condition (Vaf ≧ Vh+Vth) are both satisfied, the above embodiment extends the target inter-vehicle distance. Therefore, even if the adjacent lane rear vehicle has cut in between the host vehicle and the objective vehicle to be followed, the distance between the host vehicle and the adjacent lane rear vehicle that has cut in is not extremely short. Consequently, the host vehicle is not rapidly decelerated, and the adjacent lane rear vehicle can smoothly cut in. This can avoid the situation where the driver of the host vehicle feels a sense of unease.

In one of embodiments according to the present disclosure,
the controller is configured to determine whether or not the specific situation is occurring (step 525), based on:

a vehicle speed (Vh) of the host vehicle (HV),
a vehicle speed (Vaf) of the adjacent lane rear vehicle (AF),
a vehicle speed (Vap) of an adjacent lane preceding vehicle (AP) that is traveling immediately ahead of the adjacent lane rear vehicle in the adjacent lane, and
a distance (Da) from the host vehicle (HV) to the adjacent lane preceding vehicle (AP).

According to the above embodiment, the embodiment can determine whether or not the specific situation has been occurring accurately.

Notably, in the above description, in order to facilitate understanding of the present disclosure, the constituent elements corresponding to those of embodiments which will be described later are accompanied by parenthesized symbols and/or names which are used in the embodiments; however, the constituent elements of the disclosure are not limited to those in the embodiments defined by the symbols and/or names. The present disclosure covers a vehicle traveling control method, and a non-transitory storage medium storing a program thereof.

## BRIEF DESCRIPTION OF THE DRAWINGS

FIG. 1 is a schematic diagram of a vehicle traveling control apparatus according to an embodiment of the present disclosure.
FIG. 2 is a drawing illustrating a host vehicle, an objective vehicle to be followed (host lane preceding vehicle), an adjacent lane rear vehicle, and an adjacent lane preceding vehicle.
FIG. 3 shows a routine executed by a CPU of a driving assistance ECU shown in FIG. 1.
FIG. 4 shows a routine executed by the CPU of the driving assistance ECU shown in FIG. 1.

FIG. 5 shows a routine executed by the CPU of the driving assistance ECU shown in FIG. 1.

FIG. 6 shows a positional relationship among the host vehicle, the objective vehicle to be followed (host lane preceding vehicle), the adjacent lane rear vehicle, and the adjacent lane preceding vehicle, as well as parameters regarding those vehicles.

FIG. 7 shows a routine executed by the CPU of the driving assistance ECU shown in FIG. 1.

DETAILED DESCRIPTION

A vehicle traveling control apparatus (hereinafter, referred to as a "present control apparatus") according to an embodiment of the present disclosure will be described with reference to the drawings. First, main terms used in the present specification and the drawings will be described.

A host vehicle: an own vehicle on which the present control apparatus is mounted (a vehicle in focus).

An other vehicle: a vehicle other than the host vehicle.

A host lane: a lane in which the host vehicle is traveling.

An adjacent lane: A lane which is adjacent to the host lane.

A host lane preceding vehicle: an other vehicle, which travels in the host lane and immediately ahead of the host vehicle. The host vehicle is supposed to follow the host lane preceding vehicle so as to maintain an inter-vehicle distance between the host vehicle and the host lane preceding vehicle at a predetermined target inter-vehicle distance. The host lane preceding vehicle is sometimes referred to as an "objective vehicle to be followed".

An adjacent lane rear vehicle: an other vehicle, which travels in the adjacent lane and immediately rear of (immediately behind) the host vehicle.

<Configuration>

The present disclosure apparatus DS shown in FIG. 1 is mounted on the host vehicle. The host vehicle may be any one of a vehicle having an internal combustion engine as a drive source, a vehicle having an electric motor as a drive source (i.e., an electric vehicle), and a hybrid vehicle.

The present disclosure apparatus DS comprises a driving assistance ECU 10, a power train ECU 30, and a brake ECU 40. These ECUs are connected to each other through Controller Area Network (CAN) (that is a communication among sensor system) in such a manner that they can exchange data with each other. An "ECU" is an abbreviation of an electronic control device/unit, and may sometimes be referred to as a "controller" or a "computer". The ECU is an electronic control circuit that includes a microcomputer as a main component. The microcomputer includes a CPU (a processor), a ROM, a RAM, and an interface (an I/F). The CPU realizes various functions by executing instructions (routines) stored in the memory (i.e., ROM).

The present control apparatus DS comprises a forward radar device 21, a front leftward radar device 22L, a front rightward radar device 22R, a rear leftward radar device 23L, a rear rightward radar device 23R, and a frontward camera device 24. These devices are configured to communicate with the driving assistance ECU 10 through the CAN so that they can exchange data with each other. In addition, the driving assistance ECU 10 are connected with an ACC operation switch 25, and a vehicle speed sensor 26, so as to receive output signals of them.

Each of the forward radar device 21, the front leftward radar device 22L, the front rightward radar device 22R, the rear leftward radar device 23L, and the rear rightward radar device 23R is simply referred to as a "radar device", when they do not have to be discriminated from each other.

The radar device is a well-known device configured to obtain information on an object present around the host vehicle, using electrical waves in a millimeter waveband. The radar device includes a radar transmitting/receiving section and a processing section (i.e., a radar ECU). The radar transmitting/receiving section transmits millimeter waves within a predetermined detection range every time a predetermined time elapses, and receives the millimeter waves reflected by the object. The radar transmitting/receiving section transmits information on the transmitted millimeter waves and information on the received millimeter waves to the processing section. The processing section obtains radar object information, based on the information sent from the radar transmitting/receiving section, and transmits the radar object information to the driving assistance ECU 10. The radar object information includes a distance between an object and a position at which the radar transmitting/receiving section is disposed, an azimuth of the object with respect to the transmitting/receiving section, and a relative speed of the object with respect to the transmitting/receiving section.

The forward radar device 21 is disposed at a center position in the vehicle width direction of the front end of the host vehicle. The forward radar device 21 obtains radar object information on an object present in front of the vehicle, and transmits this radar object information to the driving assistance ECU 10.

The front leftward radar device 22L is disposed at a left end in the vehicle width direction of the front end of the host vehicle. The front leftward radar device 22L obtains radar object information on an object present in front left side of the vehicle, and transmits this radar object information to the driving assistance ECU 10.

The front rightward radar device 22R is disposed at a right end in the vehicle width direction of the front end of the host vehicle. The front rightward radar device 22R obtains radar object information on an object present in front right side of the vehicle, and transmits this radar object information to the driving assistance ECU 10.

The rear leftward radar device 23L is disposed at a left end in the vehicle width direction of the rear end of the host vehicle. The rear leftward radar device 23L obtains radar object information on an object present in rear left side of the vehicle, and transmits this radar object information to the driving assistance ECU 10.

The rear rightward radar device 23R is disposed at a right end in the vehicle width direction of the rear end of the host vehicle. The rear rightward radar device 23R obtains radar object information on an object present in rear right side of the vehicle, and transmits this radar object information to the driving assistance ECU 10.

The driving assistance ECU 10 fuses the radar object information transmitted from these radar devices to produce radar fusion object information on the object present around the vehicle. It should be noted that the object information is represented using an X-Y coordinate system. An X axis of this X-Y coordinate system extends in a front-rear direction of the host vehicle and passes through the center in the vehicle width direction of the host vehicle. A Y axis of this X-Y coordinate system is an axis orthogonal to the X axis. An origin of the X-Y coordinate system is at the center position in the vehicle width direction of the front end of the host vehicle. The X-coordinate is positive in the frontward direction of the host vehicle, and is negative in the rearward direction of the host vehicle. The Y-coordinate is positive in the leftward direction of the host vehicle, and is negative in the rightward direction of the host vehicle.

The frontward camera device 24 includes an unillustrated camera and an unillustrated image ECU. The camera captures (or takes a picture of) a "scene in front of the host vehicle" every time a predetermined time elapses to obtain image data. The image ECU recognizes (detects), based on the image data from the camera, "a left demarcation line and a right demarcation line" of the host lane, "a left demarcation line and a right demarcation line" of a left adjacent lane adjacent in the left side to the host lane, and "a left demarcation line and a right demarcation line" of a right adjacent lane adjacent in the right side to the host lane. Note that a demarcation line of a lane is generally a lane demarcation line (i.e., a lane marker), and is a white line or a yellow line, for example. The left demarcation line of the host lane is the right demarcation line of the left adjacent lane. The right demarcation line of the host lane is the left demarcation line of the right adjacent lane. Furthermore, the image ECU produces camera object information based on the image data transmitted from the camera. The camera object information includes "a position (i.e., a longitudinal position and a lateral position) and a type" of an object present in front of the host vehicle. The driving assistance ECU 10 fuses the radar fusion object information and the camera object information to produce fusion object information which is final object information on an object present around the host vehicle.

The ACC operation switch 25 is a switch operated by a driver of the host vehicle. An ACC means Adaptive Cruise Control (i.e. the following inter-vehicle distance control). When predetermined operations are made to the ACC operation switch 25, an ACC start requirement and an ACC termination requirement are generated, in accordance with the operation. In addition, a set inter-vehicle time Tset that is set as a target inter-vehicle time Ttgt is changed based on another operation to the ACC operation switch 25.

The vehicle speed sensor 26 detects a speed (vehicle speed) Vh of the host vehicle to output a signal indicative of the vehicle speed Vh.

A power train ECU 30 is connected with a power train sensor 31 and a power train actuator 32. The power train ECU 30 receives detection signals of the power train sensor 31. The power train sensor 31 includes an acceleration pedal operation amount sensor. When the drive source is the internal combustion engine, the power train sensor 31 includes an engine rotational speed sensor. The power train ECU 30 drives the power train actuator 32 to control an unillustrated drive device including the drive source, so as to adjust a drive force of the host vehicle.

A brake ECU 40 is connected with a brake sensor 41 and a brake actuator 42. The brake ECU 40 receives detection signals of the brake sensor 41. The brake sensor 41 includes a brake pedal operation amount sensor and a wheel rotational speed sensor detecting a wheel rotational speed of each wheel. The brake ECU 40 drives the brake actuator 42 to control an unillustrated brake device of the host vehicle so as to adjust a brake force applied to the host vehicle.

(Outline of operation)

As shown in FIG. 2, the present control apparatus DS performs a following inter-vehicle distance control to let the host vehicle HV follow the host lane preceding vehicle (i.e., the objective vehicle to be followed) PV that is traveling in the host lane HL in such a manner that an inter-vehicle distance Dh between the host lane preceding vehicle PV and the host vehicle HV is maintained/kept at a predetermined target inter-vehicle distance Dtgt. The predetermined target inter-vehicle distance Dtgt is usually equal to a set inter-vehicle distance Dset that has been set by the driver of the host vehicle HV. Note that the set inter-vehicle distance Dset is equal to a product (Vh·Tset) of the "host vehicle speed Vh" and the "set inter-vehicle time Tset that has been set by the driver of the host vehicle HV".

In the meantime, a situation/case sometimes occurs during the following inter-vehicle distance control is being executed where an adjacent lane preceding vehicle AP whose vehicle speed is lower than the host vehicle speed Vh is traveling in the adjacent lane AL, and an adjacent lane rear vehicle AF whose vehicle speed is higher than the host vehicle speed Vh is traveling in the adjacent lane AL in such a manner that the adjacent lane rear vehicle AF is approaching the adjacent lane preceding vehicle AP. This situation is a specific situation where adjacent lane rear vehicle AF is likely to cut in between the host vehicle HV and the host lane preceding vehicle PV, as shown by an arrow CI in FIG. 2.

When this cutting-in by the adjacent lane rear vehicle AF occurs, that adjacent lane rear vehicle AF that has cut in becomes a host lane preceding vehicle PV for the host vehicle HV. Consequently, the inter-vehicle distance between the host vehicle HV and the host lane preceding vehicle PV becomes extremely short as compared to before the cutting-in occurs, and therefore, the host vehicle HV is rapidly decelerated by the following inter-vehicle distance control. This situation frequently happens when the inter-vehicle distance Dh before the cutting-in is relatively short. When the host vehicle HV is rapidly decelerated frequently due to the cutting-in that occurs frequently, the driver of the host vehicle is likely to feel discomfort or feel a sense of unease.

In view of the above, when an extending condition of the target inter-vehicle distance Dtgt, which will be described later, in a case where the specific condition occurs, becomes satisfied, the present control apparatus DS lengthen (extend) the target inter-vehicle distance Dtgt before the adjacent lane rear vehicle cuts in. This extends the inter-vehicle distance Dh between the host vehicle HV and the host lane preceding vehicle PV. Therefore, the adjacent lane rear vehicle can smoothly cut in, and the inter-vehicle distance between the "host vehicle HV" and the "adjacent lane rear vehicle AF that has cut in" becomes relatively long. This can reduce a possibility that the host vehicle HV is rapidly decelerated. Consequently, the possibility that the driver of the host vehicle feels discomfort or feels a sense of unease can be decreased.

To the contrary, when a shortening condition of the target inter-vehicle distance Dtgt, which will be described later, in a case where the specific condition occurs, becomes satisfied, the present control apparatus DS shortens (reduces) the target inter-vehicle distance Dtgt before the adjacent lane rear vehicle cuts in. This decreases the inter-vehicle distance Dh between the host vehicle HV and the host lane preceding vehicle PV. Therefore, a possibility that the adjacent lane rear vehicle cuts in can be reduced, and thus, a frequence that the host vehicle HV is rapidly decelerated can also be reduced. Consequently, the possibility that the driver of the host vehicle feels discomfort or feels a sense of unease can be decreased.

(Specific operation)

The CPU of the driving assistance ECU 10 is referred to as a CPU unless otherwise noted. The CPU executes routines shown by flowcharts in FIGs. 3 to 5, and 7, every time a predetermined time elapses.

1. Start and End determination of ACC (following inter-vehicle distance control)

When an appropriate time point comes, the CPU starts processing from step 300 in FIG. 3, and proceeds to step 310. At step 310, the CPU determines whether or not a value of an ACC execution flag XACC is "0". The value of the ACC execution flag XACC is set to "1" when an ACC start condition becomes satisfied (refer to step 340 described later), and is set to "0" when an ACC end condition becomes satisfied (refer to step 360 described later).

Note that the values of the ACC execution flag XACC and the other flags described later are set to "0" through an unillustrated initialization routine executed by the CPU when a position of a start switch (e.g., an ignition key switch, a ready switch, or the like) of the host vehicle HV is changed from an off position to an on position.

When the value of the ACC execution flag XACC is "0", the CPU makes a "Yes" determination at step 310, and proceed to step 320. At step 320, the CPU determines whether or not the ACC start condition becomes satisfied. For example, the ACC start condition becomes satisfied, when a predetermined operation to start the following inter-vehicle distance control is performed to the ACC operation switch 25 while the following inter-vehicle distance control is not being executed (i.e., when the ACC start requirement is generated).

When the ACC start condition is not satisfied, the CPU makes a "No" determination at step 320, and directly proceeds to step 395 to terminate the present routine tentatively. Whereas, when the ACC start condition is satisfied, the CPU makes a "Yes" determination at step 320, and executes processes of step 330 and step 340. Thereafter, the CPU proceeds to step 395 to terminate the present routine.

Step 330: The CPU sets the target inter-vehicle time Ttgt to the set inter-vehicle time Tset that has been selected by the driver. Note that the driver can operate the ACC operation switch 25 to select, as the set inter-vehicle distance time Tset, one of a short time Tshort, a medium time Tmedium, and a long time Tlong. A relationship described in the following formula (1) is satisfied between the time Tshort, the time Tmedium, and the time Tlong.

$$0 < Tshort < Tmedium < Tlong \quad \cdots (1)$$

Step 340: The CPU sets the value of the ACC execution flag XACC to "1". This causes the following inter-vehicle distance control to be executed through the routine shown in FIG. 4 described later.

When the value of the ACC execution flag XACC is not "0" (i.e., is "1") at the time point at which the CPU proceeds to step 310, the CPU makes a "No" determination at step 310, and proceed to step 350. At step 350, the CPU determines whether or not the ACC end condition becomes satisfied. For example, the ACC end condition becomes satisfied, when a predetermined operation to end the following inter-vehicle distance control is performed to the ACC operation switch 25 while the following inter-vehicle distance control is being executed (i.e., when the ACC end requirement is generated).

When the ACC end condition is not satisfied, the CPU makes a "No" determination at step 350, and directly proceeds to step 395 to terminate the present routine tentatively. Whereas, when the ACC end condition is satisfied, the CPU makes a "Yes" determination at step 350, and executes processes from step 360 to step 390, sequentially. Thereafter, the CPU proceeds to step 395 to terminate the present routine.

Step 360: The CPU sets the value of the ACC execution flag XACC to "0".

Step 370: The CPU sets a value of an inter-vehicle distance control execution flag XFU to "0".

Step 380: The CPU sets a value of an inter-vehicle distance shortening flag XS to "0".

Step 390: The CPU sets a value of an inter-vehicle distance extending flag XL to "0".

2. Execution of ACC (following inter-vehicle distance control)

When an appropriate time point comes, the CPU starts processing from step 400 in FIG. 4, and proceeds to step 410. At step 410, the CPU determines whether or not the value of the ACC execution flag XACC is "1". When the value of the ACC execution flag XACC is not "1" (i.e., when the value of the ACC execution flag XACC is "0"), the CPU makes a "No" determination at step 410, and directly proceeds to step 495 to terminate the present routine tentatively.

Whereas, when the value of the ACC execution flag XACC is "1", the CPU makes a "Yes" determination at step 410, and proceed to step 420. At step 420, the CPU determines whether or not a preceding vehicle, that can be regarded as an objective vehicle to be followed (i.e., a following object) is present in the host lane. Namely, the CPU determines whether or not the host lane preceding vehicle as the objective vehicle to be followed is present. For example, when an other vehicle traveling immediately ahead of the host vehicle in the host lane is present, and the inter-vehicle distance between the host vehicle and that other vehicle is equal to or shorter than a predetermined inter-vehicle distance threshold, the CPU determines that the other vehicle is the host lane preceding vehicle.

When the host lane preceding vehicle (the objective vehicle to be followed) is present, the CPU makes a "Yes" determination at step 420, and executes processes from step 430 to step 450, sequentially. Thereafter, the CPU proceeds to step 495 to terminate the present routine.

Step 430: The CPU obtains the target inter-vehicle distance Dtgt by assigning the target inter-vehicle time Ttgt and the host vehicle speed Vh to the following formula (2). The target inter-vehicle distance Dtgt is a product of the target inter-vehicle time Ttgt and the host vehicle speed Vh. As is apparent from the formula (2), the target inter-vehicle distance Dtgt is longer as the target inter-vehicle time Ttgt is longer, and is shorter as the target inter-vehicle time Ttgt is shorter.

$$Dtgt = Vh \cdot Ttgt \quad \cdots (2)$$

Step 440: The CPU executes the following inter-vehicle distance control. Specifically, the CPU calculates a "target acceleration for following Gtgt" in accordance with the following formulas (3) and (4). Then, the CPU controls an actual acceleration of the host vehicle (i.e., a change amount in the host vehicle speed Vh per unit time) in such a manner that the actual acceleration of the host vehicle coincides with the target acceleration for following Gtgt, by transmitting instructions to the power train ECU 30 and the brake ECU 40. Note that Dh in the formula (3) is an actual inter-vehicle distance between the host vehicle HV and the host lane preceding vehicle PV (refer to FIG. 6). Vrelative in the formula (4) is a relative speed of the host lane preceding vehicle PV with respect to the host vehicle HV, and becomes positive when the host lane preceding vehicle PV is moving away from the host vehicle HV. K0, K1, and K2 are predetermined positive gains (coefficients).

$$\text{Inter-vehicle distance deviation } \Delta D = \text{Actual inter-vehicle distance } Dh - \text{Target inter-vehicle distance } Dtgt \quad (3)$$

$$\text{Target acceleration for following } Gtgt = K0 \cdot (K1 \cdot \Delta D + K2 \cdot Vrelative) \quad \cdots (4)$$

Step 450: The CPU sets the value of the inter-vehicle distance control execution flag XFU to "1".

Whereas, when the host lane preceding vehicle (the objective vehicle to be followed) is not present at the time point at which the CPU proceeds to step 420, the CPU makes a "No" determination at step 420 and proceeds to step 460. At step 460, the CPU executes a well-known constant speed cruise control. Namely, the CPU memorizes, as a target vehicle speed, the host vehicle speed of when the ACC start requirement is generated, and control the acceleration of the host vehicle in such a manner that an actual host vehicle speed Vh coincides with the target vehicle speed. Note that the driver can change the target vehicle speed by a predetermined acceleration operation or a predetermined deceleration operation to the ACC operation switch 25.

Subsequently, the CPU proceeds to step 470, and sets the value of the inter-vehicle distance control execution flag XFU to "0". Thereafter, the CPU proceeds to step 495 to terminate the present routine tentatively. In this manner, when the following inter-vehicle distance control for the host lane preceding vehicle is being executed, the value of the inter-vehicle distance control execution flag XFU is set at "1".

3. Change of target inter-vehicle time (target inter-vehicle distance)

When an appropriate time point comes, the CPU starts processing from step 500 in FIG. 5, and proceeds to step 505. At step 505, the CPU determines whether or not the value of the inter-vehicle distance control execution flag XFU is "1". Namely, at step 505, the CPU determines whether or not the following inter-vehicle distance control is currently being executed. When the value of the inter-vehicle distance control execution flag XFU is not "1", the CPU makes a "No" determination at step 505, and directly proceeds to step 595 to terminate the present routine tentatively.

Whereas, when the value of the inter-vehicle distance control execution flag XFU is "1", the CPU makes a "Yes" determination at step 505, and proceeds to step 510. At step 510, the CPU determines whether or not the value of the inter-vehicle distance extending flag XL is "0". Namely, at step 510, the CPU determines whether or not the current state is a state where the "following inter-vehicle distance control using the extended (or lengthen) target inter-vehicle distance" is not being executed. When the value of the inter-vehicle distance extending flag XL is not "0", the CPU makes a "No" determination at step 510, and directly proceeds to step 595.

Whereas, when the value of the inter-vehicle distance extending flag XL is "0", the CPU makes a "Yes" determination at step 510, and proceeds to step 515. At step 515, the CPU determines whether or not the value of the inter-vehicle distance shortening flag XS is "0". Namely, at step 515, the CPU determines whether or not the current state is a state where the "following inter-vehicle distance control using the shortened target inter-vehicle distance" is not being executed. When the value of the inter-vehicle distance shortening flag XS is not "0", the CPU makes a "No" determination at step 515, and directly proceeds to step 595.

When the value of the inter-vehicle distance shortening flag XS is "0", the CPU makes a "Yes determination at step 515, and proceeds to step 520. At step 520, the CPU determines whether or not an absolute value (a magnitude) of a difference between the "actual inter-vehicle distance Dh between the host vehicle HV and the host lane preceding vehicle PV" and the "target inter-vehicle distance Dtgt" is equal to or shorter than a distance threshold Dth. Note that the target inter-vehicle time Ttgt is set at the set inter-vehicle time Tset which the driver has selected. The target inter-vehicle distance Dtgt is equal to the set inter-vehicle distance Dset which is equal to the product (=Vh·Tset) of the host vehicle speed Vh and the set inter-vehicle time Tset. Accordingly, at step 520, the CPU determines whether or not the actual inter-vehicle distance Dh is substantially equal to the set inter-vehicle distance Dset.

When the absolute value (the magnitude) of the difference between the "actual inter-vehicle distance Dh" and the "target inter-vehicle distance Dtgt" is neither equal to nor shorter than the distance threshold Dth, the CPU makes a "No" determination at step 520, and proceeds to step 595. Whereas, when the absolute value (the magnitude) of the difference between the "actual inter-vehicle distance Dh" and the "target inter-vehicle distance Dtgt" is equal to or shorter than the distance threshold Dth, the CPU makes a "Yes" determination at step 520, and proceeds to step 525.

Note that the step 520 may be omitted. In this case, the CPU proceeds to step 525 when the CPU makes a "Yes" determination at step 515.

At step 525, the CPU determines whether or not the above-described specific situation (i.e., the situation where the adjacent lane rear vehicle AF is likely to cut in between the host vehicle HV and the host lane preceding vehicle PV) is occurring. The specific situation is determined to be occurring when conditions 1T to 5T, described below, are all satisfied. Note that, as shown in FIG. 6, the values used in these conditions are as follows.

Vh: Host vehicle speed
Vap: Speed of the adjacent lane preceding vehicle AP
Vaf: Speed of the adjacent lane rear vehicle AF
Da: Distance between a front end of the host vehicle HV and a rear end of the adjacent lane preceding vehicle AP (namely, a distance from the host vehicle HV to the adjacent lane preceding vehicle AP)

<Occurrence condition of specific situation>

(Condition 1T) The condition 1T is satisfied when the adjacent lane preceding vehicle AP is present, and the rear end of the adjacent lane preceding vehicle AP is ahead of the front end of the host vehicle HV. Namely, the condition 1T is satisfied when the distance Da between the front end of the host vehicle HV and the rear end of the adjacent lane preceding vehicle AP (i.e., the distance from the host vehicle HV to the adjacent lane preceding vehicle AP) is equal to or longer than "0" (Da ≧ 0).

(Condition 2T) The condition 2T is satisfied when the adjacent lane rear vehicle AF is present, and the front end of the adjacent lane rear vehicle AF is behind or at the same position as the rear end of the host vehicle HV.

(Condition 3T) The condition 3T is satisfied when the vehicle speed Vaf of the adjacent lane rear vehicle AF is higher than the host vehicle speed Vh (Vaf > Vh) at a time point at which the front end of the adjacent lane rear vehicle AF reaches a position that satisfies a predetermined condition with respect to the host vehicle HV. The condition that vehicle speed Vaf of the adjacent lane rear vehicle AF is higher than the host vehicle speed Vh (Vaf > Vh) is referred to as a "first relative speed condition", for convenience.

(Condition 4T) The condition 4T is satisfied when the vehicle speed Vap of the adjacent lane preceding vehicle AP is equal to or lower than the host vehicle speed Vh (Vap ≧ Vh) at the time point at which the front end of the adjacent lane rear vehicle AF reaches the position that satisfies the predetermined condition with respect to the host vehicle HV. The condition that vehicle speed Vap of the adjacent lane preceding vehicle AP is equal to or lower than the host vehicle speed Vh (Vap ≦ Vh) is referred to as a "second relative speed condition", for convenience.

(Condition 5T) The condition 5T is satisfied when the distance Da between the front end of the host vehicle HV and the rear end of the adjacent lane preceding vehicle AP is equal to or longer than a first distance threshold C1th (C1th ≦ Da) at the time point at which the front end of the adjacent lane rear vehicle AF reaches the position that satisfies the predetermined condition with respect to the host vehicle HV. The condition that the distance Da is equal to or longer than the first distance threshold C1 th (C1 th ≦ Da) is referred to as a first inter-vehicle distance condition, for convenience.

The "time point at which the front end of the adjacent lane rear vehicle AF reaches the position that satisfies the predetermined condition with respect to the host vehicle HV" used in some of the above-described conditions is a time point at which the front end of the adjacent lane rear vehicle AF reaches a predetermined specific position between a specific rear position which is a first predetermined distance away in the rear direction from the rear end of the hose vehicle and a specific front position which is a second predetermined distance away in the front direction from the front end of the host vehicle HV. For example, the specific position is the rear end of the host vehicle HV. In this example, the "time point at which the front end of the adjacent lane rear vehicle AF reaches the position that satisfies the predetermined condition with respect to the host vehicle HV" means a "time point at which the front end of the adjacent lane rear vehicle AF coincides with the position of the rear end of the host vehicle HV".

As described above, the present control apparatus DS determines whether or not the above-described specific condition has been occurring, based on the host vehicle speed Vh, the vehicle speed Vaf of the adjacent lane rear vehicle AF, the vehicle speed Vap of the adjacent lane preceding vehicle AP, and the distance Da from the host vehicle HV to the adjacent lane preceding vehicle AP.

When the specific situation has not occurred, the CPU makes a "No" determination at step 525, and directly proceeds to step 595 to terminate the present routine tentatively. Whereas, when the specific situation has occurred, the CPU makes a "Yes" determination at step 525, and proceeds to step 530.

At step 530, the CPU determines whether or not a shortening condition of the target inter-vehicle distance becomes satisfied. The shortening condition of the target inter-vehicle distance becomes satisfied, when both of a following condition 1S and a following condition 2S are satisfied.

<Shortening condition of the target inter-vehicle distance>

(Condition 1S) The condition 1S is satisfied, when the vehicle speed Vaf of the adjacent lane rear vehicle AF is lower than a value (Vh+Vth) obtained by adding a vehicle speed threshold Vth to the host vehicle speed Vh (i.e., Vaf < Vh + Vth) at a time point at which the front end of the adjacent lane rear vehicle AF reaches a position that satisfies a predetermined condition with respect to the host vehicle HV. The condition that the vehicle speed Vaf of the adjacent lane rear vehicle AF is lower than the value (Vh+Vth) obtained by adding the vehicle speed threshold Vth to the host vehicle speed Vh (i.e., Vaf < Vh + Vth) is referred to as a third relative speed condition, for convenience.

Note that, when both of the condition 3T and the condition 1S are satisfied (i.e., Vh < Vaf < Vh+Vth), it can be said that the vehicle speed Vaf is higher than the host vehicle speed Vh, but is not very high as compared to the host vehicle speed Vh (namely, the vehicle speed Vaf is slightly higher than the host vehicle speed Vh).

(Condition 2S) The condition 2S is satisfied, when the distance Da between the front end of the host vehicle HV and the rear end of the adjacent lane preceding vehicle AP is equal to or shorter than a second distance threshold C2th that is longer than the first distance threshold C1th (Da ≦ C2th) at the time point at which the front end of the adjacent lane rear vehicle AF reaches the position that satisfies the predetermined condition with respect to the host vehicle HV. The condition that the distance Da is equal to or shorter than the second distance threshold C2th (Da ≦ C2th) is referred to as a second inter-vehicle distance condition, for convenience.

Note that, when both of the condition 5T and the condition 2S are satisfied (i.e., C1th < Da < C2th), it can be said that the distance Da is a distance that allows the cutting-in, but is relatively short. For example, the second distance threshold C2th is twice (e.g., 9.4 m) an overall length of a passenger vehicle as specified in the passenger vehicle standard.

When the shortening condition of the target inter-vehicle distance is satisfied, the CPU makes a "Yes" determination at step 530 shown in FIG. 5, and executes processes of step 535 and step 540, sequentially. Thereafter, the CPU proceeds to step 595 to terminate the present routine, tentatively.

Step 535: The CPU sets the target inter-vehicle time Ttgt to a time (Tshort - dta) obtained by subtracting a positive constant value dta from the short time Tshort. This shortens the target inter-vehicle distance Dtgt which is the product of the host vehicle speed Vh and the target inter-vehicle time Ttgt (refer to step 430 shown in FIG. 4). Therefore, the following inter-vehicle distance control shortens the inter-vehicle distance between the host vehicle HV and the host lane preceding vehicle PV. Note that the constant value dta may be "0". In this case, the target inter-vehicle distance Dtgt is shortened only when the set inter-vehicle time Tset is set at either one of the medium time Tmedium and the long time Tlong. Namely, in this case, the target inter-vehicle distance Dtgt is set to a distance corresponding to the shortest target inter-vehicle time (Tshort) that the present control apparatus can permit to the driver.

Step 540: The CPU sets the value of the inter-vehicle distance shortening flag XS to "1".

Whereas, when the shortening condition of the target inter-vehicle distance is not satisfied at the time point at which the CPU proceeds to step 530, the CPU makes a "No" determination at step 530, and proceeds to step 545. At step 545, the CPU determines whether or not an extending condition of the target inter-vehicle distance becomes satisfied. The extending condition of the target inter-vehicle distance becomes satisfied, when both of a following condition 1L and a following condition 2L are satisfied.

<Extending condition of the target inter-vehicle distance>

(Condition 1L) The condition 1L is satisfied, when the vehicle speed Vaf of the adjacent lane rear vehicle AF is higher than the value (Vh+Vth) obtained by adding the vehicle speed threshold Vth to the host vehicle speed Vh (i.e., Vaf ≧ Vh + Vth) at the time point at which the front end of the adjacent lane rear vehicle AF reaches the position that satisfies the predetermined condition with respect to the host vehicle HV. Namely, the condition 1L is satisfied, when the vehicle speed Vaf is considerably higher than the host vehicle speed Vh. The condition that the vehicle speed Vaf of the adjacent lane rear vehicle AF is higher than the value (Vh+Vth) obtained by adding the vehicle speed threshold Vth to the host vehicle speed Vh (i.e., Vaf ≧ Vh + Vth) is referred to as a fourth relative speed condition.

(Condition 2L) The condition 2L is satisfied, when the distance Da between the front end of the host vehicle HV and the rear end of the adjacent preceding vehicle AP is longer that the second distance threshold C2th (Da > C2th) at the time point at which the front end of the adjacent lane rear vehicle AF reaches the position that satisfies the predetermined condition with respect to the host vehicle HV. The condition that the distance Da is longer than the second distance threshold C2th (Da > C2th) is referred to as a third inter-vehicle distance condition, for convenience.

When the condition 2L is satisfied (Da > C2th), it can be said that the distance Da is long to the extend that the cutting-in by the adjacent lane rear vehicle is induced.

When the extending condition of the target inter-vehicle distance is satisfied, the CPU makes a "Yes" determination at step 545, and executes "processes of step 550 and step 555" described below, sequentially. Thereafter, the CPU proceeds to step 595 to terminate the present routine, tentatively.

Step 550: The CPU sets the target inter-vehicle time Ttgt to a time (Tlong + dtb) obtained by adding a positive constant value dtb to the long time Tlong. This lengthens/extends the target inter-vehicle distance Dtgt which is the product of the host vehicle speed Vh and the target inter-vehicle time Ttgt (refer to step 430 shown in FIG. 4). Therefore, the following inter-vehicle distance control lengthens the inter-vehicle distance between the host vehicle HV and the host lane preceding vehicle PV. Note that the constant value dtb may be "0". In this case, the target inter-vehicle distance Dtgt is lengthened only when the set inter-vehicle time Tset is set at either one of the short time Tshort and the medium time Tmedium. Namely, in this case, the target inter-vehicle distance Dtgt is set to a distance corresponding to the longest target inter-vehicle time (Tlong) that the present control apparatus can permit to the driver.

Step 555: The CPU sets the value of the inter-vehicle distance extending flag XL to "1".

Note that, when the extending condition of the target inter-vehicle distance is not satisfied at the time point at which the CPU proceeds to step 545, the CPU makes a "No" determination at step 545, and proceeds to step 595.

4. End of change in target inter-vehicle time

When an appropriate time point comes, the CPU starts processing from step 700 in FIG. 7, and proceeds to step 710. At step 710, the CPU determines whether or not the value of the inter-vehicle distance extending flag XL is "1". When the value of the inter-vehicle distance extending flag XL is "1", the CPU makes a "Yes" determination at step 710, and proceed to step 730 described later.

Whereas, when the value of the inter-vehicle distance extending flag XL is not "1", the CPU makes a "No" determination at step 710, and proceed to step 720. At step 720, the CPU determines whether or not the value of the inter-vehicle distance shortening flag XS is "1". When the value of the inter-vehicle distance shortening flag XS is "1", the CPU makes a "Yes" determination at step 720, and proceed to step 730 described later. Whereas, when the value of the inter-vehicle distance shortening flag XS is not "1", the CPU makes a "No" determination at step 720, and directly proceeds to step 795 to terminate the present routine tentatively.

At step 730, the CPU determines whether or not a changing (extending/shortening) end condition of the target inter-vehicle distance becomes satisfied. The changing end condition of the target inter-vehicle distance becomes satisfied, when at least one of conditions E1 to E4, described below, is satisfied.

(Condition E1) The condition E1 is satisfied, when the adjacent lane preceding vehicle AP is no longer present. For example, this condition E1 becomes satisfied, when the adjacent lane preceding vehicle AP has changed lanes, or when the host vehicle HV has overtaken the adjacent lane preceding vehicle AP.

(Condition E2) The condition E2 is satisfied, when the adjacent lane rear vehicle AF is no longer present. For example, this condition E2 becomes satisfied, when the adjacent lane rear vehicle AF has changed lanes, or when the adjacent lane rear vehicle AF has cut in in front of the host vehicle HV and becomes a new objective vehicle to be follower (i.e., the host lane preceding vehicle).

(Condition E3) The condition E3 is satisfied, when the vehicle speed Vap of the adjacent lane preceding vehicle AP becomes higher than the host vehicle speed Vh (Vap > Vh).

(Condition E4) The condition E4 is satisfied, when the vehicle speed Vaf of the adjacent lane rear vehicle AF becomes lower than the host vehicle speed Vh (Vaf < Vh).

When the changing end condition of the target inter-vehicle distance is not satisfied, the CPU makes a "No" determination at step 730, and directly proceeds to step 795 to terminate the present routine tentatively.

Whereas, when the changing end condition of the target inter-vehicle distance is satisfied, the CPU makes a "Yes" determination at step 730, and executes processes from step 740 to step 760, sequentially. Thereafter, the CPU proceeds to step 795 to terminate the present routine, tentatively.

Step 740: The CPU sets the target inter-vehicle time Ttgt to the set inter-vehicle time Tset. This returns the target inter-vehicle distance Dtgt to the set inter-vehicle distance Dset.

Step 750: The CPU sets the value of the inter-vehicle distance shortening flag XS to "0".

Step 760: The CPU sets the value of the inter-vehicle distance extending flag XL to "0".

As has been described, the present control apparatus DS extends or shortens the inter-vehicle distance between the host vehicle HV and the host lane preceding vehicle PV, when the specific situation is occurring where the adjacent lane rear vehicle AF is likely to cut in between the host vehicle HV and the host lane preceding vehicle PV while the following inter-vehicle distance control is being executed. Consequently, the present control apparatus DS can prevent an aggressive cutting-in by the adjacent lane rear vehicle AF, or enables the adjacent lane rear vehicle AF to cut in smoothly. Thus, even when the cutting-in occurs, the inter-vehicle distance between the host vehicle HV and the vehicle that has cut in does not become excessively short. Accordingly, the host vehicle HV is not rapidly decelerated by the following inter-vehicle distance control, and therefore, the possibility that the driver of the host vehicle feels discomfort or feels a sense of unease can be decreased.

It should be noted that the present disclosure is not limited to the above-described embodiment, and may adopt various modified examples within the scope of the present disclosure. For example, the present disclosure can be applied to a host vehicle that is an autonomous driving vehicle and is being autonomously driven, or to a host vehicle that is an autonomous driving vehicle in a state where its driving mode has been switched from an autonomous driving mode to a manual driving mode.

According to the present control apparatus DS, the prerequisite condition for the above-described specific situation is that the adjacent lane preceding vehicle AP and the adjacent lane rear vehicle AF are both present. However, the fact that at least the adjacent lane rear vehicle AF is present may be the prerequisite condition for the above-described specific situation.

In such a case (i.e., when the fact that at least the adjacent lane rear vehicle AF is present is the prerequisite condition for the above-described specific situation), the present control apparatus DS may determine that the specific situation is occurring, when at least the first relative speed condition (Vaf > Vh) that is satisfied when the vehicle speed Vaf of the adjacent lane rear vehicle AF is higher than the host vehicle speed Vh is satisfied.

In addition, the prerequisite condition for the above-described specific situation may include a condition that turn indicators of the adjacent lane rear vehicle AF in the side of the cutting-in (i.e., the turn indicators in the direction from the adjacent lane to the host lane) are blinking.

Furthermore, the present control apparatus DS may determine that the specific situation is occurring, when at least the second relative speed condition (Vap $\leqq$ Vh) that is satisfied when the adjacent lane preceding vehicle AP is present and the vehicle speed Vap of the adjacent lane preceding vehicle AP is equal to or lower than the host vehicle speed Vh is satisfied, in addition to the first relative speed condition. It should be noted that the second relative speed condition may be a condition that is satisfied when an absolute value (a magnitude) of a difference between the vehicle speed Vap of the adjacent lane preceding vehicle AP and the host vehicle speed Vh is equal to or smaller than a predetermined vehicle speed difference. In other words, the it may be determined that the specific situation is occurring, even when the vehicle speed Vap of the adjacent lane preceding vehicle AP is equal to or lower than a value that is slightly higher than the host vehicle speed Vh (i.e., the value obtained by adding a positive predetermined value $\alpha$ to the host vehicle speed Vh) (i.e., $Vap \leqq Vh + \alpha$, $\alpha>0$).

Moreover, the present control apparatus DS may determine that the specific situation is occurring, when the first inter-vehicle distance condition ($Da \geqq C1th$) that is satisfied when the distance Da from the host vehicle HV to the adjacent lane preceding vehicle AP is equal to or longer than the first distance threshold C1th is satisfied, in addition to the first relative speed condition and the second relative speed condition.

The present control apparatus DS is configured to determine that the shortening condition of the target inter-vehicle distance is satisfied, when the "second inter-vehicle distance condition (Da^C2th) that is satisfied when the distance Da from the host vehicle HV to the adjacent lane preceding vehicle AP is equal to or shorter than the second distance threshold C2th" and the "third relative speed condition ($Vaf < Vh+Vth$) that is satisfied when the vehicle speed Vaf of the adjacent lane rear vehicle AF is lower than the predetermined vehicle speed (Vh+Vth)" are both satisfied. However, the present control apparatus DS may determine that the shortening condition of the target inter-vehicle distance is satisfied when at least the second inter-vehicle distance condition ($Da \leqq C2th$) is satisfied.

In addition, the present control apparatus DS is configured to determine that the extending condition of the target inter-vehicle distance is satisfied, when the "third inter-vehicle distance condition ($Da > C2th$) that is satisfied when the distance Da from the host vehicle HV to the adjacent lane preceding vehicle AP is longer than the second distance threshold C2th" and the "fourth relative speed condition ($Vaf \geqq Vh+Vth$) that is satisfied when the vehicle speed Vaf of the adjacent lane rear vehicle AF is equal to or higher than the predetermined vehicle speed (Vh+Vth)" are both satisfied. However, the present control apparatus DS may determine that the extending condition of the target inter-vehicle distance is satisfied when at least the third inter-vehicle distance condition ($Da > C2th$) is satisfied.

Furthermore, the present control apparatus DS may be configured to determine that the extending condition of the target inter-vehicle distance is satisfied, when the above-described shortening condition of the target inter-vehicle distance is not satisfied while the above-described specific situation is occurring. Similarly, the present control apparatus DS may be configured to determine that the shortening condition of the target inter-vehicle distance is satisfied, when the above-described extending condition of the target inter-vehicle distance is not satisfied while the above-described specific situation is occurring.

The present control apparatus DS is configured to set the product of the target inter-vehicle time Ttgt and the host vehicle speed Vh as the target inter-vehicle distance Dtgt, and is configured to change the target inter-vehicle distance Dtgt by changing the target inter-vehicle time Ttgt. However, the present control apparatus DS may be configured to directly set the target inter-vehicle distance Dtgt or to directly change the target inter-vehicle distance Dtgt, without using the target inter-vehicle time Ttgt.

Furthermore, the present control apparatus DS may be configured to display a notification to notify the driver that the target inter-vehicle distance will be shortened or to issue a message that target inter-vehicle distance will be shortened, when the above-described shortening condition of the target inter-vehicle distance becomes satisfied. Similarly, the present control apparatus DS may be configured to display a notification to notify the driver that the target inter-vehicle distance will be extended or to issue a message that target inter-vehicle distance will be extended, when the above-described extending condition of the target inter-vehicle distance becomes satisfied. Alternatively, the present control apparatus DS may be configured to display a notification to notify the driver that the target inter-vehicle distance will be changed or to issue a message that target inter-vehicle distance will be changed, when the above-described shortening condition of the target inter-vehicle distance or the the above-described extending condition of the target inter-vehicle distance becomes satisfied.

## Claims

1. A vehicle traveling control apparatus comprising a controller (10) configured to be capable of executing a following inter-vehicle distance control to let a host vehicle (HV) travel in such a manner that an inter-vehicle distance (Dh) between said host vehicle (HV) and an objective vehicle (PV) to be followed traveling immediately ahead of said host vehicle is maintained at a predetermined target inter-vehicle distance (Dtgt),
wherein, said controller is configured to change said target inter-vehicle distance (Dtgt) when a specific situation has occurred while executing said following inter-vehicle distance control, said specific situation being a situation where an adjacent lane rear vehicle (AF) that is traveling in an adjacent lane adjacent to a host lane in which said host vehicle (HV) is traveling and behind said host vehicle (HV) is present, and said adjacent lane rear vehicle (AF) is likely to cut in between said host vehicle (HV) and said objective vehicle (PV) to be followed.

2. The vehicle traveling control apparatus according to claim 1, wherein, said controller is configured to determine that said specific situation is occurring when at least a first relative speed condition is satisfied, said first relative speed condition being a condition that is satisfied when a vehicle speed (Vaf) of said adjacent lane rear vehicle (AF) is higher than a vehicle speed (Vh) of said host vehicle (HV).

3. The vehicle traveling control apparatus according to claim 1 or 2, wherein, said controller is configured to determine that said specific situation is occurring when a second relative speed condition is satisfied in addition to said first relative speed condition, said second relative speed condition being a condition that is satisfied when an adjacent lane preceding vehicle (AP) that is traveling immediately ahead of said adjacent lane rear vehicle (AF) is present in said adjacent lane, and a vehicle speed (Vap) of said adjacent lane preceding vehicle (AP) is equal to or lower than said vehicle speed (Vh) of said host vehicle (HV).

4. The vehicle traveling control apparatus according to any of claims 1 to 3, wherein, said controller is configured to determine that said specific situation is occurring when a first inter-vehicle distance condition is satisfied in addition to said first relative speed condition and said second relative speed condition, said first inter-vehicle distance condition being a condition that is satisfied when a distance (Da) from said host vehicle (HV) to said adjacent lane preceding vehicle (AP) is equal to or longer than a first distance threshold (C1th).

5. The vehicle traveling control apparatus according to claim 4, wherein, said controller is configured to shorten said target inter-vehicle distance when at least a second inter-vehicle distance condition is satisfied in a case in which it is determined that said specific situation is occurring, said second inter-vehicle distance condition being a condition that is satisfied when said distance (Da) from said host vehicle (HV) to said adjacent lane preceding vehicle (AP) is equal to or shorter than a second distance threshold (C2th) that is longer than said first distance threshold (C1th).

6. The vehicle traveling control apparatus according to claim 4, wherein, said controller is configured to extend said target inter-vehicle distance when at least a third inter-vehicle distance condition is satisfied in a case in which it is determined that said specific situation is occurring, said third inter-vehicle distance condition being a condition that is satisfied when said distance (Da) from said host vehicle (HV) to said adjacent lane preceding vehicle (AP) is longer than a second distance threshold (C2th) that is longer than said first distance threshold (C1th).

7. The vehicle traveling control apparatus according to claim 4,

   wherein, said controller is configured to shorten said target inter-vehicle distance when a second inter-vehicle distance condition and a third relative speed condition are both satisfied in a case in which it is determined that said specific situation is occurring,
   said second inter-vehicle distance condition being a condition that is satisfied when said distance (Da) from said host vehicle (HV) to said adjacent lane preceding vehicle (AP) is equal to or shorter than a second distance threshold (C2th) that is longer than said first distance threshold (C1th), and
   said third relative speed condition being a condition that is satisfied when said vehicle speed (Vaf) of said adjacent lane rear vehicle (AF) is lower than a vehicle speed obtained by adding a predetermined vehicle speed threshold (Vth) to said vehicle speed (Vh) of said host vehicle.

8. The vehicle traveling control apparatus according to claim 4,

   wherein, said controller is configured to extend said target inter-vehicle distance when a third inter-vehicle distance condition and a fourth relative speed condition are both satisfied in a case in which it is determined that said specific situation is occurring,
   said third inter-vehicle distance condition being a condition that is satisfied when said distance (Da) from said host vehicle (HV) to said adjacent lane preceding vehicle (AP) is longer than a second distance threshold (C2th) that is longer than said first distance threshold (C1th), and
   said fourth relative speed condition being a condition that is satisfied when said vehicle speed (Vaf) of said adjacent lane rear vehicle is equal to or higher than a vehicle speed obtained by adding a predetermined vehicle speed threshold (Vth) to said vehicle speed (Vh) of said host vehicle.

9. The vehicle traveling control apparatus according to any of claims 1 to 8, wherein, said controller is configured to determine whether or not said specific situation is occurring, based on:

a vehicle speed (Vh) of said host vehicle,
a vehicle speed (Vaf) of said adjacent lane rear vehicle,
a vehicle speed (Vap) of an adjacent lane preceding vehicle (AP) that is traveling immediately ahead of said adjacent lane rear vehicle in said adjacent lane, and
a distance (Da) from said host vehicle (HV) to said adjacent lane preceding vehicle (AP).

**10.** A vehicle traveling control method including a step of executing a following inter-vehicle distance control to let a host vehicle (HV) travel in such a manner that an inter-vehicle distance (Dh) between said host vehicle (HV) and an objective vehicle (PV) to be followed traveling immediately ahead of said host vehicle (HV) is maintained at a predetermined target inter-vehicle distance (Dtgt),
wherein, said step of executing said following inter-vehicle distance control includes a step of changing said target inter-vehicle distance (Dtgt) when a specific situation has occurred while executing said following inter-vehicle distance control, said specific situation being a situation where an adjacent lane rear vehicle (AF) that is traveling in an adjacent lane adjacent to a host lane in which said host vehicle (HV) is traveling and behind said host vehicle (HV) is present, and said adjacent lane rear vehicle (AF) is likely to cut in between said host vehicle (HV) and said objective vehicle (PV) to be followed.

**11.** A non-transitory storage medium storing a program, said program causing a computer (10) mounted on a host vehicle (HV) to implement:

a step of executing a following inter-vehicle distance control to let a host vehicle (HV) travel in such a manner that an inter-vehicle distance (Dh) between said host vehicle (HV) and an objective vehicle (PV) to be followed traveling immediately ahead of said host vehicle (HV) is maintained at a predetermined target inter-vehicle distance (Dtgt); and
a step of changing said target inter-vehicle distance when a specific situation has occurred while executing said following inter-vehicle distance control, said specific situation being a situation where an adjacent lane rear vehicle (AF) that is traveling in an adjacent lane adjacent to a host lane in which said host vehicle (HV) is traveling and behind said host vehicle (HV) is present, and said adjacent lane rear vehicle (AF) is likely to cut in between said host vehicle (HV) and said objective vehicle (PV) to be followed.

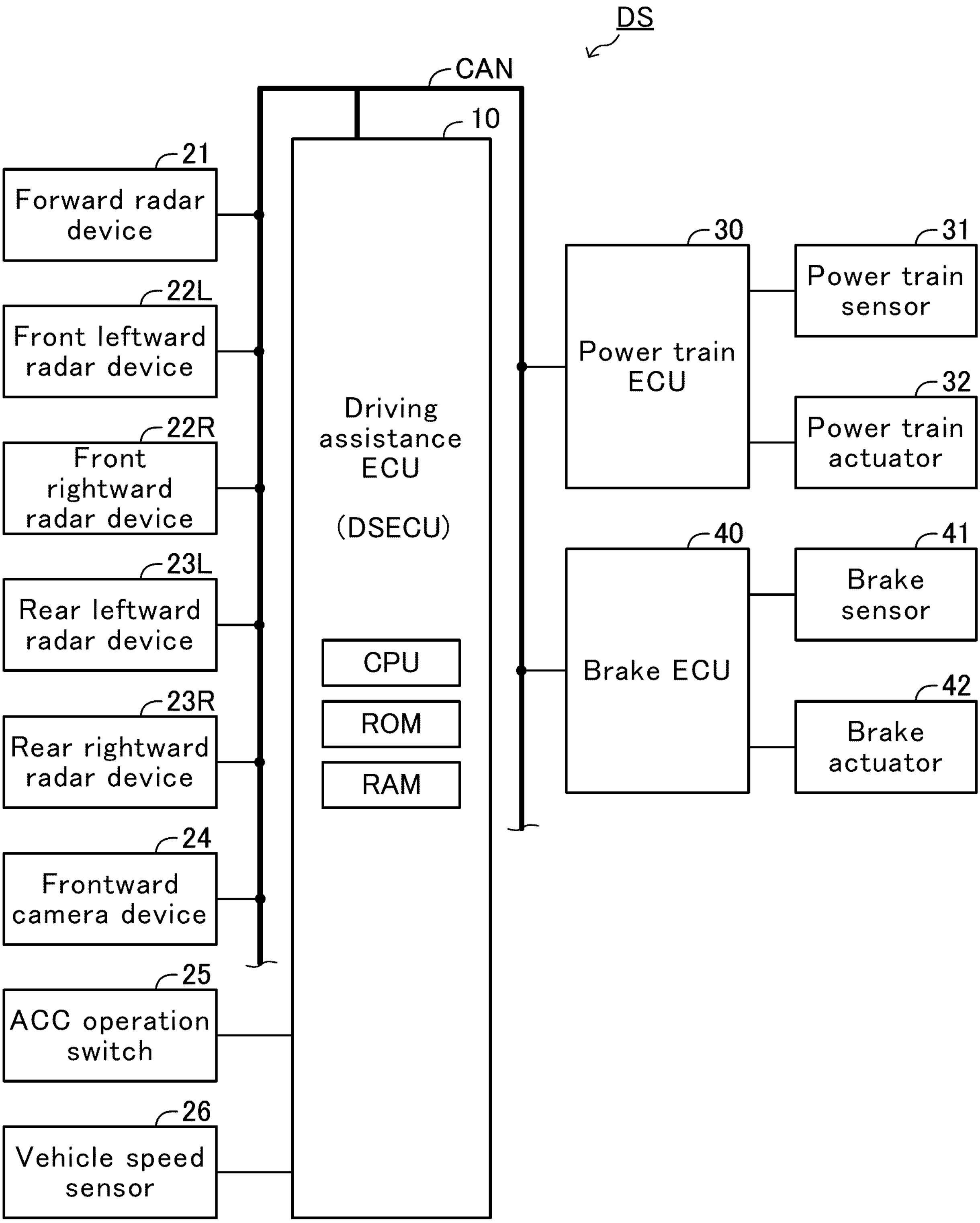
DS
CAN
10
21
Forward radar device
22L
Front leftward radar device
22R
Front rightward radar device
23L
Rear leftward radar device
23R
Rear rightward radar device
24
Frontward camera device
25
ACC operation switch
26
Vehicle speed sensor
Driving assistance ECU
(DSECU)
CPU
ROM
RAM
30
Power train ECU
31
Power train sensor
32
Power train actuator
40
Brake ECU
41
Brake sensor
42
Brake actuator

FIG.1

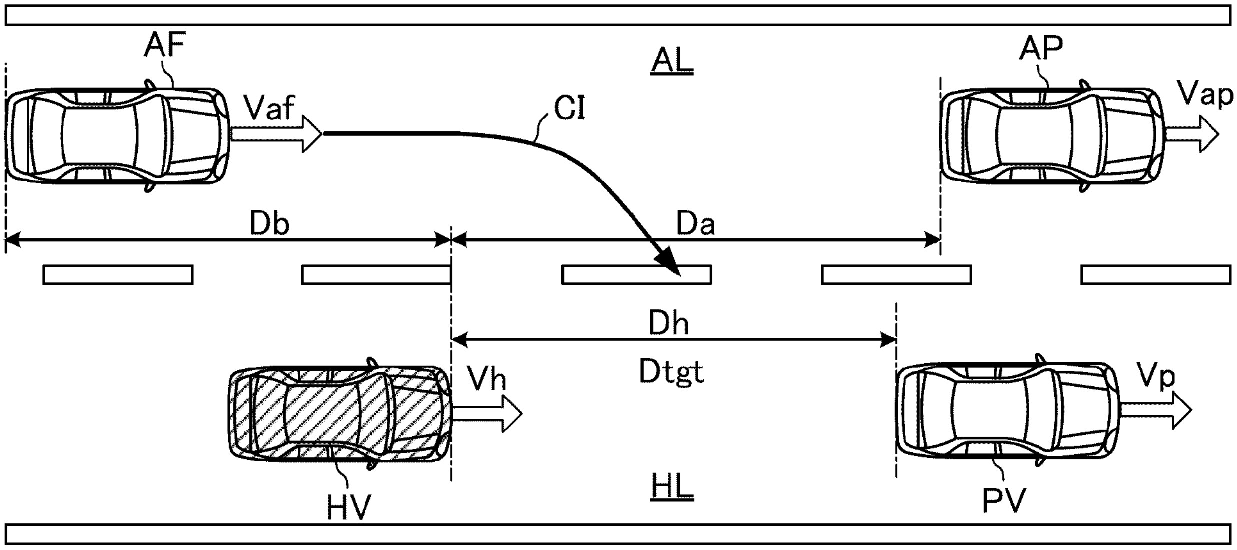


FIG.2

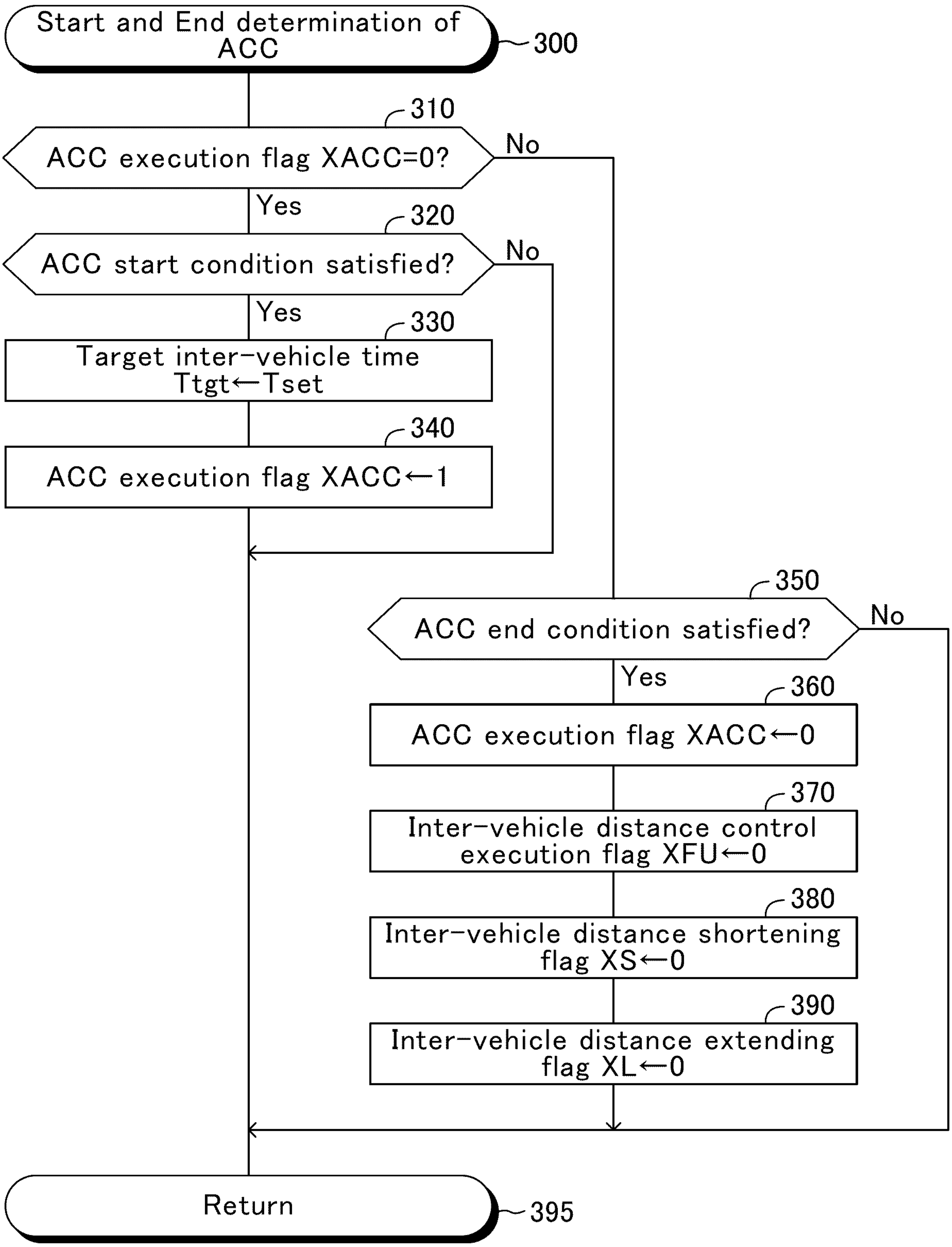
Start and End determination of ACC
300
310
ACC execution flag XACC=0?
No
Yes
320
ACC start condition satisfied?
No
Yes
330
Target inter-vehicle time Ttgt←Tset
340
ACC execution flag XACC←1
350
ACC end condition satisfied?
No
Yes
360
ACC execution flag XACC←0
370
Inter-vehicle distance control execution flag XFU←0
380
Inter-vehicle distance shortening flag XS←0
390
Inter-vehicle distance extending flag XL←0
Return
395

FIG.3

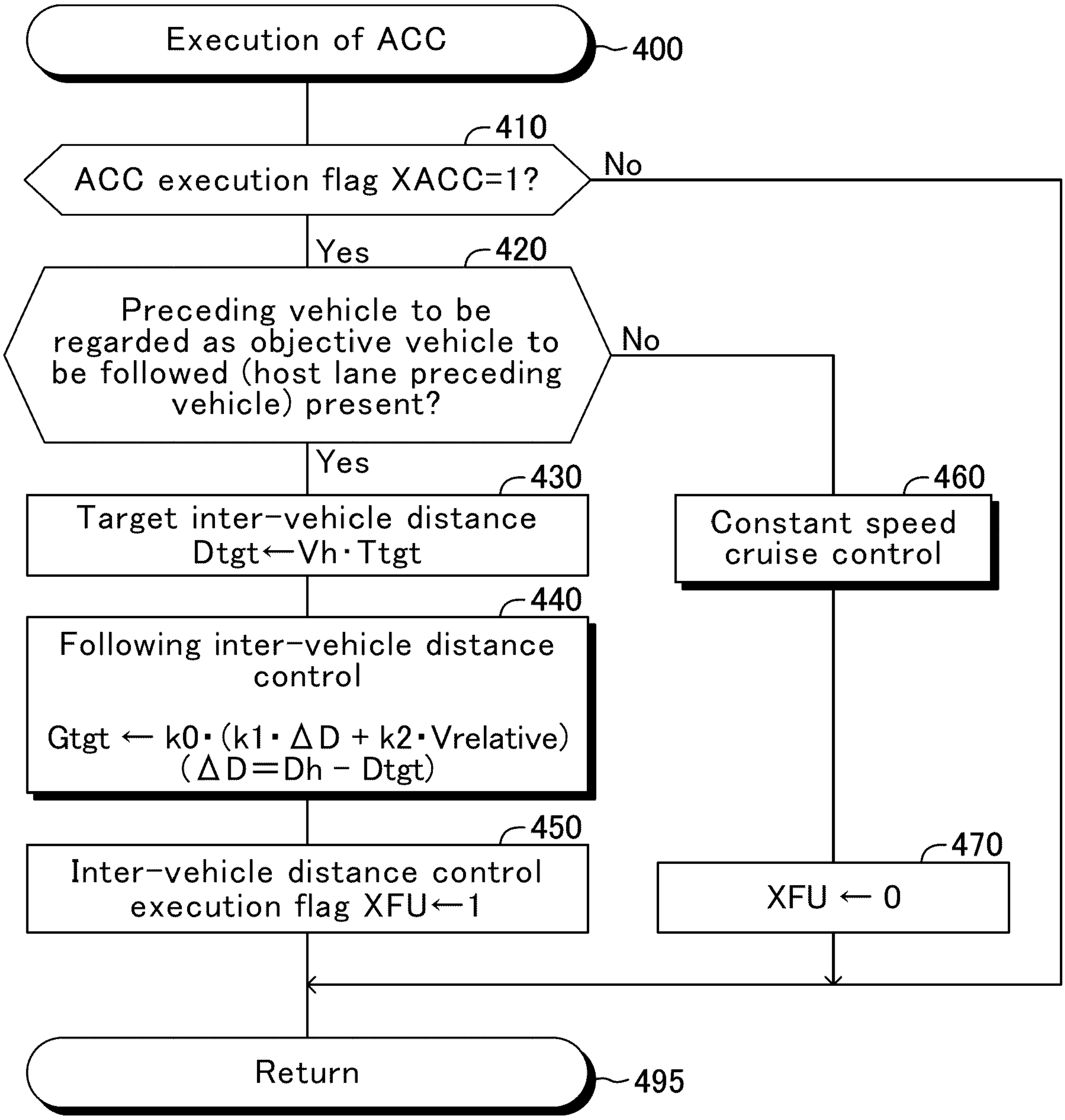
Execution of ACC
400
410
ACC execution flag XACC=1?
No
Yes
420
Preceding vehicle to be regarded as objective vehicle to be followed (host lane preceding vehicle) present?
No
Yes
430
Target inter-vehicle distance Dtgt←Vh·Ttgt
460
Constant speed cruise control
440
Following inter-vehicle distance control
Gtgt ← k0·(k1·ΔD + k2·Vrelative)
(ΔD=Dh − Dtgt)
450
Inter-vehicle distance control execution flag XFU←1
470
XFU ← 0
Return
495

FIG.4

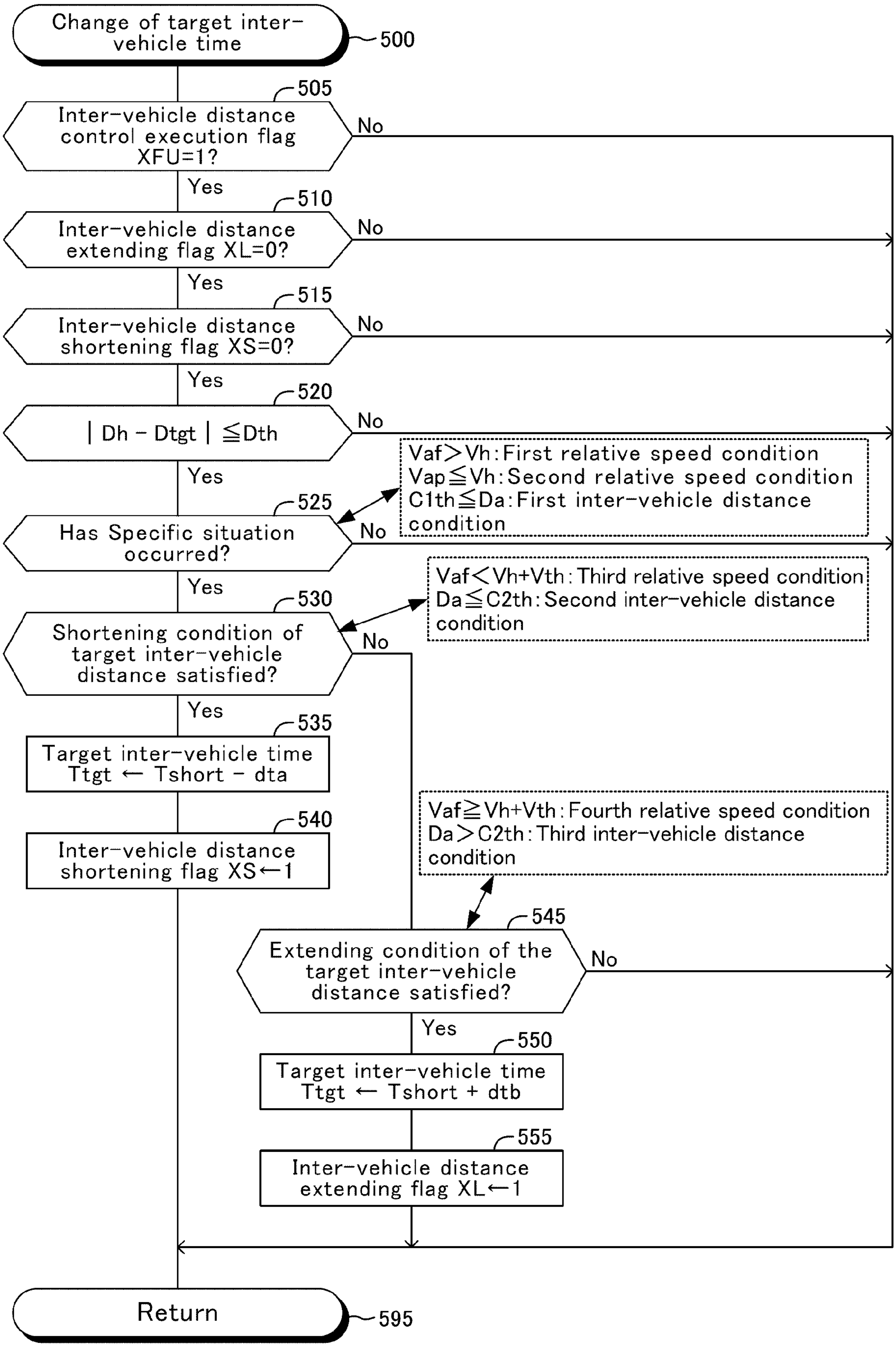
Change of target inter-vehicle time
500
505
Inter-vehicle distance control execution flag XFU=1?
No
Yes
510
Inter-vehicle distance extending flag XL=0?
No
Yes
515
Inter-vehicle distance shortening flag XS=0?
No
Yes
520
| Dh − Dtgt | ≦Dth
No
Yes
Vaf>Vh: First relative speed condition
Vap≦Vh: Second relative speed condition
C1th≦Da: First inter-vehicle distance condition
525
Has Specific situation occurred?
No
Yes
Vaf<Vh+Vth: Third relative speed condition
Da≦C2th: Second inter-vehicle distance condition
530
Shortening condition of target inter-vehicle distance satisfied?
No
Yes
535
Target inter-vehicle time Ttgt ← Tshort − dta
540
Inter-vehicle distance shortening flag XS←1
Vaf≧Vh+Vth: Fourth relative speed condition
Da>C2th: Third inter-vehicle distance condition
545
Extending condition of the target inter-vehicle distance satisfied?
No
Yes
550
Target inter-vehicle time Ttgt ← Tshort + dtb
555
Inter-vehicle distance extending flag XL←1
Return
595

FIG.5

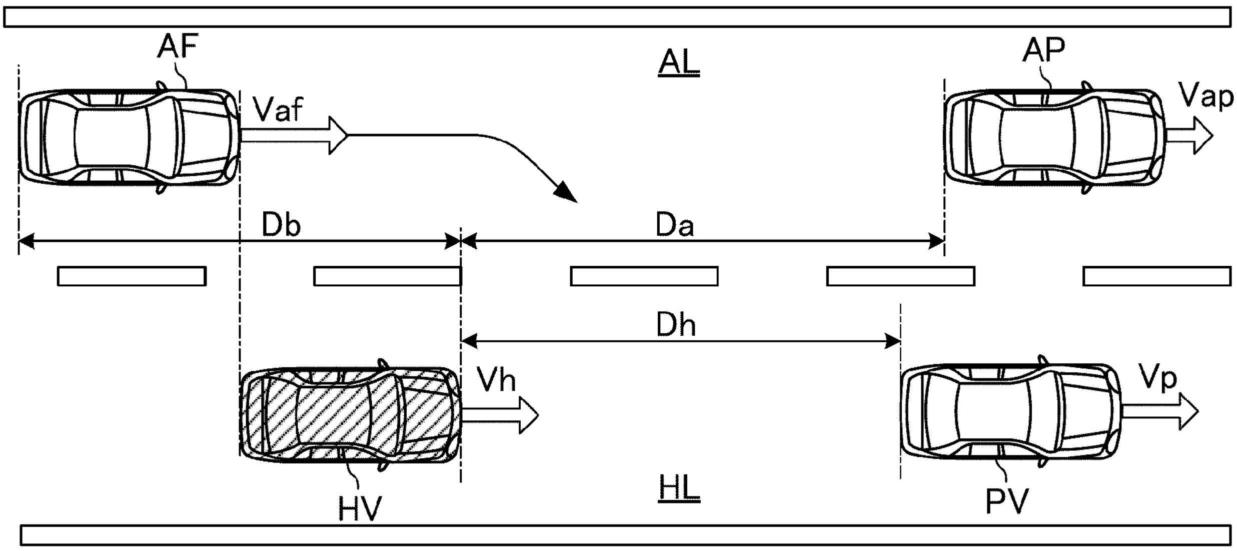


FIG.6

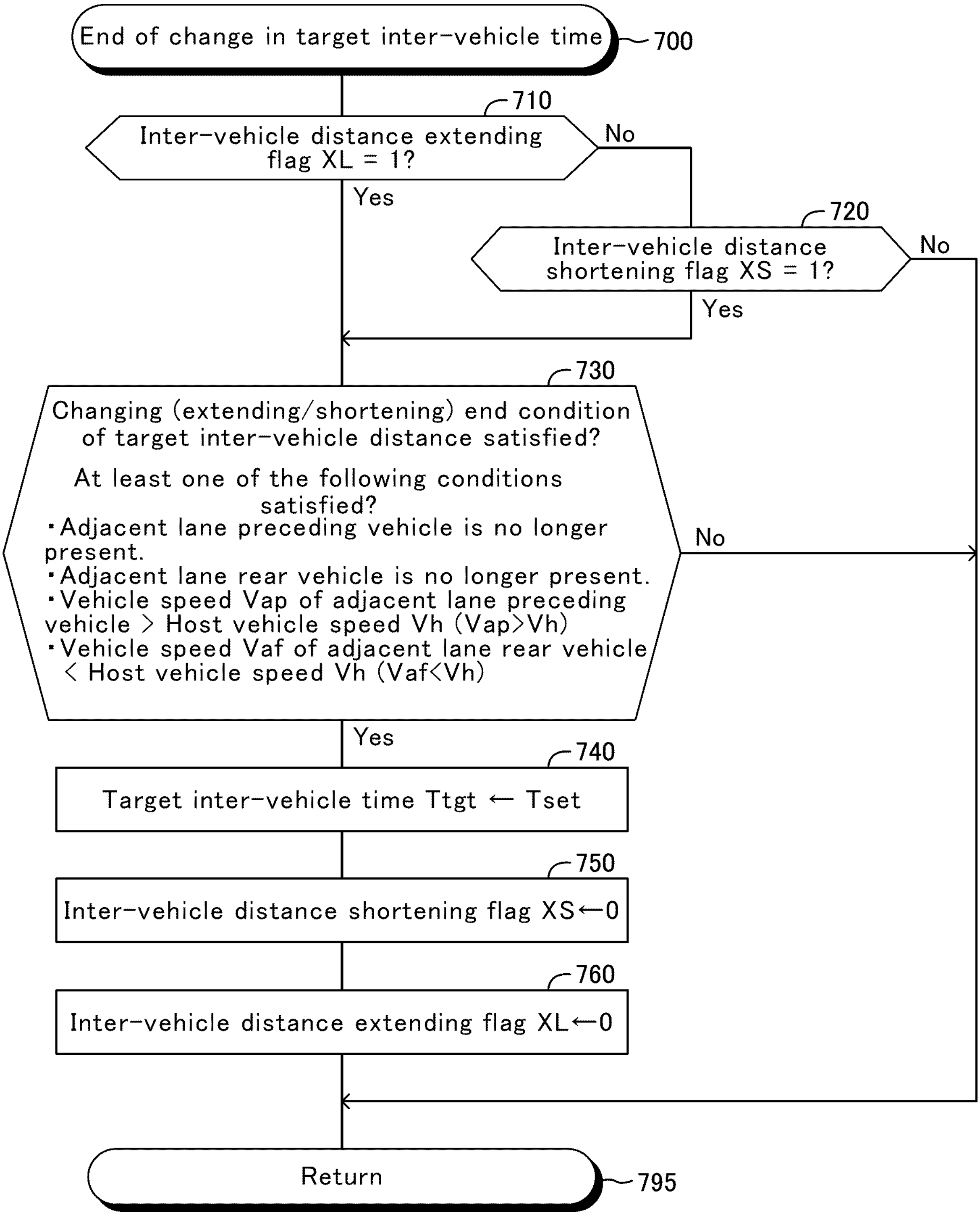
End of change in target inter-vehicle time
700
710
Inter-vehicle distance extending flag XL = 1?
No
Yes
720
Inter-vehicle distance shortening flag XS = 1?
No
Yes
730
Changing (extending/shortening) end condition of target inter-vehicle distance satisfied?
At least one of the following conditions satisfied?
・Adjacent lane preceding vehicle is no longer present.
・Adjacent lane rear vehicle is no longer present.
・Vehicle speed Vap of adjacent lane preceding vehicle > Host vehicle speed Vh (Vap>Vh)
・Vehicle speed Vaf of adjacent lane rear vehicle < Host vehicle speed Vh (Vaf<Vh)
No
Yes
740
Target inter-vehicle time Ttgt ← Tset
750
Inter-vehicle distance shortening flag XS←0
760
Inter-vehicle distance extending flag XL←0
Return
795

FIG.7

Europäisches Patentamt
European Patent Office
Office européen des brevets

# EUROPEAN SEARCH REPORT

Application Number
EP 25 15 7543

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y<br>A | DE 10 2010 020047 A1 (DAIMLER AG [DE]) 5 January 2011 (2011-01-05)<br>* paragraphs [0013] - [0021] *<br>* claims 1-4 * | 1-3,10, 11<br>9<br>4-8 | INV.<br>B60W30/16 |
| X | US 2013/226433 A1 (TOMINAGA MOTONORI [JP] ET AL) 29 August 2013 (2013-08-29)<br>* paragraphs [0034] - [0037], [0077] * | 1,2,10, 11 | |
| Y | DE 10 2007 029483 A1 (BOSCH GMBH ROBERT [DE]) 8 January 2009 (2009-01-08)<br>* paragraphs [0042], [0043] * | 9 | |
| A | US 2020/142411 A1 (STEIN GIDEON [IL]) 7 May 2020 (2020-05-07)<br>* paragraph [0153] * | 1-11 | |

TECHNICAL FIELDS SEARCHED (IPC)

B60W

The present search report has been drawn up for all claims

| Place of search | Date of completion of the search | Examiner |
|---|---|---|
| Munich | 26 June 2025 | Müller-Nagy, Andrea |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.....................................................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 25 15 7543

This annex lists the patent family members relating to the patent documents cited in the above-mentioned European search report. The members are as contained in the European Patent Office EDP file on
The European Patent Office is in no way liable for these particulars which are merely given for the purpose of information.

26-06-2025

| Patent document cited in search report | Publication date | Patent family member(s) | Publication date |
|---|---|---|---|
| DE 102010020047 A1 | 05-01-2011 | NONE | |
| US 2013226433 A1 | 29-08-2013 | DE 102013101858 A1 | 29-08-2013 |
| | | JP 5969220 B2 | 17-08-2016 |
| | | JP 2013177054 A | 09-09-2013 |
| | | US 2013226433 A1 | 29-08-2013 |
| DE 102007029483 A1 | 08-01-2009 | NONE | |
| US 2020142411 A1 | 07-05-2020 | CN 108604292 A | 28-09-2018 |
| | | CN 115223139 A | 21-10-2022 |
| | | CN 117400938 A | 16-01-2024 |
| | | EP 3380988 A1 | 03-10-2018 |
| | | EP 3742338 A1 | 25-11-2020 |
| | | EP 4378783 A1 | 05-06-2024 |
| | | JP 7188844 B2 | 13-12-2022 |
| | | JP 7582625 B2 | 13-11-2024 |
| | | JP 2019505034 A | 21-02-2019 |
| | | JP 2022172153 A | 15-11-2022 |
| | | US 2017153639 A1 | 01-06-2017 |
| | | US 2017154225 A1 | 01-06-2017 |
| | | US 2020142411 A1 | 07-05-2020 |
| | | US 2020348671 A1 | 05-11-2020 |
| | | US 2022221862 A1 | 14-07-2022 |
| | | US 2024286649 A1 | 29-08-2024 |
| | | WO 2017091690 A1 | 01-06-2017 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 6262960 A